# EUROPEAN PATENT APPLICATION

(11) **EP 1 821 539 A2**
(43) Date of publication of application: **22.08.2007**
(21) Application number: 07250600.9
(22) Date of filing: 14.02.2007
(51) Int. Cl.: H04N 7/167

(54) **Decoding apparatus and integrated circuit**

(30) Priority: 15.02.2006 JP 2006038470
(71) Applicant: MATSUSHITA ELECTRIC INDUSTRIAL CO., LTD., Osaka 571-8501 (JP)
(72) Inventor: Watanabe, T. Matsushita Electric Ind. Co, Ltd., Chuo-ku Osaka 540-6319 (JP); Kitamura, A., Matsushita Electric Ind. Co, Ltd., Chuo-ku Osaka 540-6319 (JP)
(74) Representative: Crawford, Andrew Birkby

(57) **Abstract**

A first OS 200 is started, and start up of a second OS 300 is completed while a scramble key Ks is acquired and registered (step S201). The first OS 200 stores network settings information and program channel information (control information) in a state-storage buffer 103c (step S106), and the first OS 200 is shut down. The second OS 300 begins switch-to-SMP processing (step S204), and beings SMP processing (step S205). Thereafter, the control information is read from a state-storage buffer area 103a (step S206), and a first CPU 101a and a second CPU 101b share control of units of an AV decoder 101d (step S207).

## Description

### BACKGROUND OF INVENTION

### 1. Field of the Invention

The present invention relates to a decoding apparatus for decoding encoded data that has been encrypted.

### 2. Description of the Background Art

Conventionally, there is a so-called conditional access system in which, when transmitting digital data, the digital data is encrypted on the transmission side in order to permit reception by only a limited group of recipients. Hereinafter, in the specification, encryption of digital data is referred to as "scrambling", and decryption of the encrypted digital data to restore the original data is referred to as "descrambling".

For example, in digital broadcasts, in order to protect the copyrights of broadcast programs, broadcast program data pertaining to a broadcast program is scrambled on the broadcaster side (transmission side), and the scrambled broadcast program data is descrambled by a digital broadcast reception apparatus based on key data generated by a CAS (Conditional Access System) card unique to the receiver.

One example of a conventional conditional access system is disclosed in "Access Control System for Digital Broadcasting (ARIB STD-B25)", edition 4.1, Association of Radio Industries and Businesses, revised June 5, 2003.

The following briefly describes a typical example of a conditional access system that uses a CAS card.

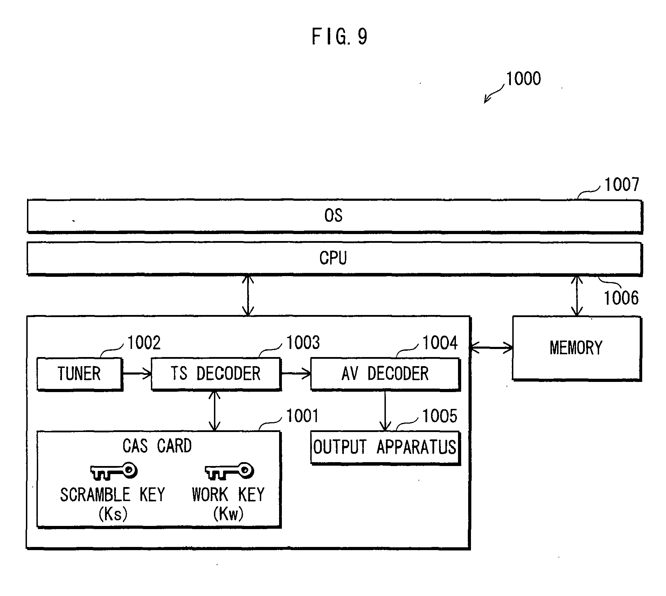

Fig.9 shows an exemplary reception apparatus 1000 able to receive a digital broadcast by a conditional access system.

First, the transmission side (not depicted) scrambles broadcast program data with use of a scramble key (Ks) updated at a short predetermined cycle (e.g., at an interval of two seconds). The transmission side then further scrambles the scramble key Ks and information related to the broadcast program with use of a work key (Kw) that does not change during a long period (e.g., one year), thereby generating data called an ECM (Entitlement Control Message: shared information).

Furthermore, the transmission side scrambles the work key Kw and content regarding a contract with the reception apparatus 1000 with use of a master key Km uniquely set in a CAS card 1001 of the reception apparatus 1000, thereby generating data called an EMM (Entitlement Management Message: private information).

The transmission side then multiplexes the scrambled broadcast program data, ECM and EMM, and transmits the multiplexed data to the reception side as broadcast data.

In the reception apparatus 1000, the broadcast data is received by a tuner 1002, the received broadcast data is demultiplexed by a TS (Transport Stream) decoder 1003 into the broadcast program data, ECM and EMM, and the EMM is descrambled by the TS decoder 1003 with use of the master key Km prerecorded on the CAS card 1001.

The TS decoder 1003 records, to the CAS card 1001, the work key Kw obtained by descrambling the EMM.

Using the TS decoder 1003, the reception apparatus 1000 then descrambles the ECM with use of the work key Kw, and records the thus-obtained scramble key Ks to an AV decoder 1004.

The AV decoder 1004 descrambles the broadcast program data with use of the scramble key Ks, decodes the descrambled broadcast program data in accordance with a digital broadcast standard (e.g., MPEG2-TS (Moving Picture Expert Group 2 - Transport Stream)), and outputs the decoded data to an output apparatus 1005.

Accordingly, a large amount of processing for descrambling must be performed on the reception side (reception apparatus 1000) until the scrambled digital data is ultimately decoded and output.

Also, the aforementioned reception apparatus 1000 that receives the digital broadcast must also perform various types of processing other than reception, decoding, and output of the broadcast program data. For example, the reception apparatus 1000 must of course switch broadcast program channels and increase/decrease the volume of audio data according to user operations, as well as, due to multi-functionalization, perform processing for decoding and outputing subtitle data included in the received stream data and data broadcast data written in BML (Broadcast Markup Language).

Also, it is possible to employ a so-called SMP (Symmetric Multi Processor) structure in which the decoding apparatus is provided with two or more CPUs that share the burden of decode processing, with the goal of speeding-up the decode processing. In this case, it is necessary to perform processing for causing the CPUs to perform distributed processing.

In light of this situation, a general-purpose OS (Operating System) such as Linux (TM) is often used as an OS 1007 for operating a CPU (Central Processing Unit) 1006 that controls the constituent units 1001 to 1005 of the reception apparatus 1000.

However, while a general-purpose OS can be used for a variety of purposes, start up takes longer than an OS specialized for specific processing such as MPEG decoding.

It therefore takes a long time from when a user activates the power supply of the reception apparatus 1000 until demultiplexing processing by the TS decoder 1003 and descrambling processing for the EMM and ECM are completed. As a result, it takes longer for the broadcast program data to be decoded and output by the AV decoder 1004, thereby making the user wait after activating the power supply of the reception apparatus 1000 to be able to watch a broadcast program.

An aim of the present invention is therefore to reduce the amount of time from starting up a decoding apparatus for decoding encoded data that has been encrypted, until beginning decoding.

### SUMMARY OF INVENTION

In order to solve the above problems, a decoding apparatus of the present invention is for successively receiving stream data and key data that is updated at a predetermined cycle and has been used to successively encrypt the stream data, and for decoding the stream data, the decoding apparatus including: a reception unit operable to successively receive the stream data and the key data; and a control unit including a first processor and a second processor that share a memory, wherein the control unit causes the first processor to execute a first OS and execute a first decoding control processing program on the first OS, the first decoding control processing program controlling decryption of the stream data with use of the received key data, and in parallel, causes the second processor to execute distributed-execution preparation processing pertaining to a second OS on which distributed execution can be performed by a plurality of processors, and in a predetermined time period that is shorter than the predetermined cycle and begins at a first point when the first processor began controlling decryption of the stream data with use of the received key data, the control unit causes the first processor to, instead of executing the first OS, execute distributed execution processing on the second OS, and in parallel, causes the second processor as well to execute the distributed execution processing on the second OS, and execute a second decoding control processing program on the second OS, the second decoding control processing program being for decoding the stream data.

According to this structure, while the first processor is executing the program (first decoding control processing program) for performing descramble processing with use of the key data on the first OS, the second processor prepares for distributed processing on the second OS, and furthermore, until the key data is updated, thereby making it necessary to acquire new key data, the first and second processor begin executing the program (second decoding control processing program) for decoding the stream data on the second OS. Therefore, instead of both the first and second processors executing the program for performing descramble processing with use of the key data on the second OS, the result of the program executed on the first OS by the first processor can be used by both of the processors to immediately begin distributive execution of the program for decoding the stream data on the second OS.

For example, a dedicated OS specialized for descramble processing and decode processing is used as the first OS, and a general-purpose OS that has a slower startup time than the dedicated OS but is versatile and can comprehensively control the decoding apparatus is used as the second OS. By first executing the program for performing descramble processing on the quick-starting first OS while the second OS is starting up, it is possible to thereafter immediately begin executing the program for decoding the stream data using the result of the program previously executed on the first OS.

This enables a shorter amount of time from when the decoding apparatus is activated and the first OS and second OS are started until processing for decoding the stream data begins.

Also, in the decoding apparatus, the control unit may begin executing processing when power is supplied to start the control unit, the distributed-execution preparation processing executed by the second processor may include processing for starting the second OS in a mode of operating on a single processor, the distributed execution processing executed on the second OS by the first processor may include processing for ending the first OS, and the distributed execution processing executed on the second OS by the second processor may include processing for changing the second OS to a mode of operating on a plurality of processors.

According to this structure, while the second OS is individually starting up when the power supply of the decoding apparatus is activated, the first processor can execute the program (first decoding control processing program) for performing descramble processing on the first OS, and when the second OS has finished preparations, both of the processors can begin performing multiprocessor processing.

Also, in the decoding apparatus, the reception unit may periodically receive the key data at a predetermined timing, the control unit may detect that the key data has been updated, and the first point may be a point at which the reception unit receives new key data at a first timing after the control unit has detected that the key data has been updated.

According to this structure, the first processor completes the program for performing descramble processing at a timing immediately after the key data has been updated, thereby giving the second processor a sufficient amount of time to begin the distributed execution processing on the second OS before the key data is updated again.

Also, the decoding apparatus may further include a decoding unit including a storage subunit and operable to decode the stream data, wherein the first decoding control processing program may include processing for recording the received key data to the storage subunit, and the second decoding control processing program may include processing for controlling the decoding unit to decode the stream data with use of the key data recorded in the storage subunit.

According to this structure, using dedicated hardware (the decoding unit) to perform decoding of the stream data enables a lightening of the processing burden on the first and second processors.

This is particularly effective when decoding data encoded in MPEG format etc., whose decoding processing puts a large burden on processors.

Also, in the decoding apparatus, the stream data may be digital broadcast stream data including elementary streams of a plurality of broadcast programs, and a plurality of channel information pieces each indicating a channel of a different one of the broadcast programs, the decoding apparatus may further include an operation unit operable to receive a user operation selecting an arbitrary broadcast program from among the plurality of broadcast programs, the first decoding control processing program may include processing for recording, to the storage subunit, a channel information piece, from among the plurality of channel information pieces, that indicates the channel of the broadcast program selected according to the user operation, and the second decoding control processing program may include processing for controlling the decoding unit to decode the stream data with use of the channel information piece recorded in the storage subunit.

According to this structure, when decoding stream data of a digital broadcast, first, with respect to the first processor, the program for performing descramble processing is executed and the channel information of the broadcast program is recorded, and thereafter both of the processors can execute the program pertaining to decoding of the stream data with use of the recorded channel information.

Also, in the decoding apparatus, the first decoding control processing program and the second decoding control processing program may be individual programs, the first decoding control processing program may be executed by the individual program pertaining thereto being loaded into the memory under management of the first OS, the second decoding control processing program may be executed by the individual program pertaining thereto being loaded into the memory under management of the second OS, and when execution of the second decoding control processing program on the second OS has begun, the control unit may execute a third OS on the second OS as a guest OS emulating the first OS, and execute the second decoding control processing program on the third OS.

According to this structure, using the third OS that functions as a guest OS enables a single program to be executed on the first OS and the second OS, which makes it possible to eliminate the need to provide another program.

This also eliminates the burden on a programmer to create and maintain another program.

Also, in the decoding apparatus, the first decoding control processing program may include processing for recording the received key data to the memory, and the second decoding control processing program may include processing for decoding the stream data with use of the key data recorded in the memory.

According to this structure, the first processor and the second processor itself decode the stream data, thereby making dedicated hardware for performing decode processing unnecessary.

This lowers the cost of manufacturing the decoding apparatus.

Also, in the decoding apparatus, the stream data may be digital broadcast stream data including elementary streams of a plurality of broadcast programs, and a plurality of channel information pieces each indicating a channel of a different one of the broadcast programs, the decoding apparatus may further include an operation unit operable to receive a user operation selecting an arbitrary broadcast program from among the plurality of broadcast programs, the first decoding control processing program may include processing for recording, to the memory, a channel information piece, from among the plurality of channel information pieces, that indicates the channel of the broadcast program selected according to the user operation, and the second decoding control processing program may include processing for decoding the stream data with use of the channel information piece recorded in the memory.

According to this structure, when decoding stream data of a digital broadcast, first, with respect to the first processor, the program for performing descramble processing is executed and the channel information of the broadcast program is recorded, and thereafter both of the processors can execute processing for decoding the stream data with use of the recorded channel information.

Also, in the decoding apparatus, the second OS may have a mode of operating on a single processor and a mode of operating on a plurality of processors, and when an execution performance of the second decoding control processing program being executed on the second OS falls below a predetermined level due to an influence of another program operating on the second OS, the control unit may cause the first processor to, instead of executing the second OS, execute the first OS and execute the first decoding control processing program on the first OS, and in parallel, cause the second processor to end execution of the second decoding control processing program, and control the second OS to change to the mode of operating on a single processor and begin execution of the other program.

According to this structure, if performance drops while the first and second processors are performing distributive execution of the program for decoding processing, the drop in multiprocessor decode processing performance can be corrected by the first processor dissociating from the other program affecting the performance, and having only the first processor execute the program for performing decode processing.

### BRIEF DESCRIPTION OF DRAWINGS

These and other objects, advantages, and features of the invention will become apparent from the following description thereof taken in conjunction with the accompanying drawings, which illustrate specific embodiments of the present invention.

In the drawings:
Fig.1 is a block diagram showing a structure of a decoding apparatus 100 pertaining to the present invention in embodiment 1;
Fig.2 is a conceptual diagram showing a relationship between hardware and software in the decoding apparatus 100;
Fig.3 is a conceptual diagram showing transitions of a scramble key Ks;
Fig.4 is a flowchart showing operations performed by the decoding apparatus 100 for receiving a digital broadcast and decoding stream data in embodiment 1;
Fig.5 is a flowchart showing processing performed by a state judgment unit 201a for acquiring the scramble key Ks;
Fig.6 is a flowchart showing processing performed by the decoding apparatus 100 after commencing SMP processing;
Fig.7 is a block diagram showing a structure of the decoding apparatus 100 pertaining to the present invention in embodiment 2;
Fig.8 is a flowchart showing operations performed by the decoding apparatus 100 for receiving a digital broadcast and decoding stream data in embodiment 2; and
Fig.9 is a conceptual diagram showing a conventional reception apparatus 1000 able to receive a digital broadcast by a conditional access system.

### DETAILED DESCRIPTION OF PREFERRED EMBODIMENTS

Embodiments of the present invention are described below with reference to the drawings.

### Embodiment 1

### 1. Overview

The following describes embodiment 1 of the present invention using an exemplary decoding apparatus 100 for digital broadcasts. The decoding apparatus 100 receives and decodes a digital broadcast, and outputs the decoded digital broadcast.

First is overview of how stream data is scrambled and exchanged between the digital broadcast transmission side and the decoding apparatus 100.

A broadcaster (not depicted) on the transmission side scrambles audio data and video data of a broadcast program (hereinafter, a combination of the audio data and video data is referred to as "AV data") with use of a scramble key (Ks) that is updated at a short predetermined cycle (e.g., at an interval of two seconds). The broadcaster then further scrambles the scramble key Ks and information related to the broadcast program with use of a work key (Kw) that does not change during a long period (e.g., one year), thereby generating an ECM.

Furthermore, the transmission side scrambles the work key Kw and content regarding a contract with the reception apparatus 100 with use of a master key Km uniquely set in a CAS card 104 of the reception apparatus 100, thereby generating an EMM.

The transmission side then multiplexes the scrambled broadcast program data, ECM and EMM, and transmits the multiplexed data to the reception side as broadcast data.

In the reception apparatus 100, the received broadcast data is demultiplexed into the AV data, ECM and EMM, the EMM is descrambled with use of the preset master key Km, and the obtained work key Kw is recorded.

The reception apparatus 100 next descrambles the ECM with use of the work key Kw, and records the thus-obtained scramble key Ks.

The reception apparatus 100 then descrambles the AV data with use of the scramble key Ks, decodes the descrambled AV data in accordance with MPEG2-TS, and outputs the decoded data.

### 2. Structure

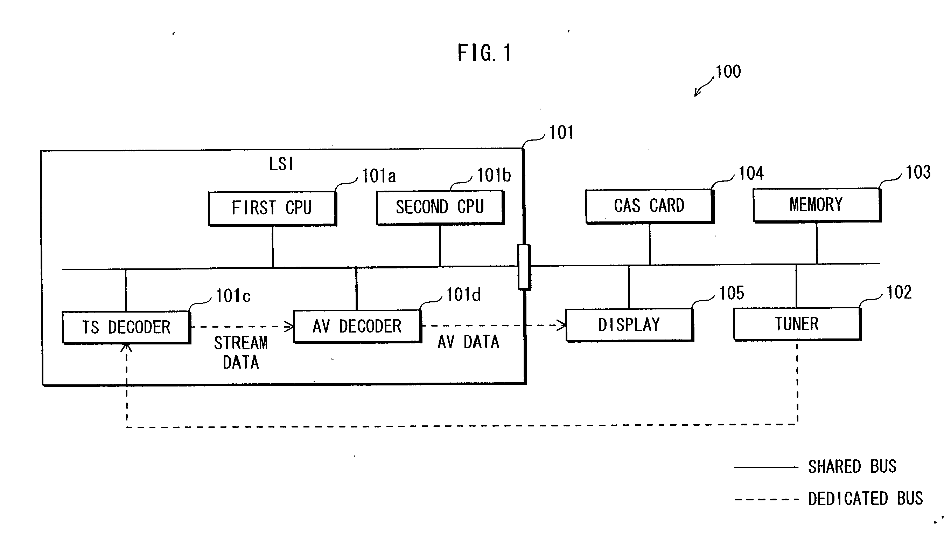

The following describes a structure of the decoding apparatus 100 with reference to Fig.1.

Fig.1 is a block diagram showing the structure of the decoding apparatus 100.

As shown in Fig.1, the decoding apparatus 100 includes an LSI (Large Scale Integration) 101 for decoding processing, a tuner 102, a memory 103, a CAS card 104, and a display 105.

The LSI 101 decodes stream data that has been encoded in MPEG2-TS format. The LSI 101 includes a first CPU 101a, a second CPU 101b, a TS decoder 101c, and an AV decoder 101d.

The first CPU 101a executes, on a first or second OS described later, a program pertaining to processing for decoding stream data. The first CPU 101a controls the TS decoder 101c and the AV decoder 101d.

The second CPU 101b executes, on the second OS described later, the program pertaining to processing for decoding stream data. The second CPU 101b controls the TS decoder 101c and the AV decoder 101d.

The TS decoder 101c receives stream data transmitted from the tuner 102, and performs demultiplex processing on the stream data based on an instruction from the first CPU 101a or second CPU 101b. In the demultiplex processing, the stream data is demultiplexed into the AV data, and data for program management, such as PSI (Program Specific Information), and the AV data is transmitted to the AV decoder 101d.

The AV decoder 101d receives the AV data transmitted from the TS decoder 101c, and executes processing for decoding the AV data based on an instruction from the first CPU 101a or second CPU 101b.

The tuner 102 receives stream data that has been transmitted from a broadcaster (not depicted) and encoded in MPEG2-TS format, and transmits the received stream data to the TS decoder 101c.

The memory 103 is a storage unit such as RAM (Random Access Memory), and stores data resulting from the processing executed by the LSI 101. The memory 103 stores, in particular, network settings information and program channel information, which is included in the PSI demultiplexed by the demultiplex processing performed by the TS decoder 101c.

The CAS card 104 stores a preset master key Km, for the purpose of protecting the copyright of the broadcast program in the digital broadcast.

The display 105 outputs audio and video obtained by the decoding of the AV decoder 101d.

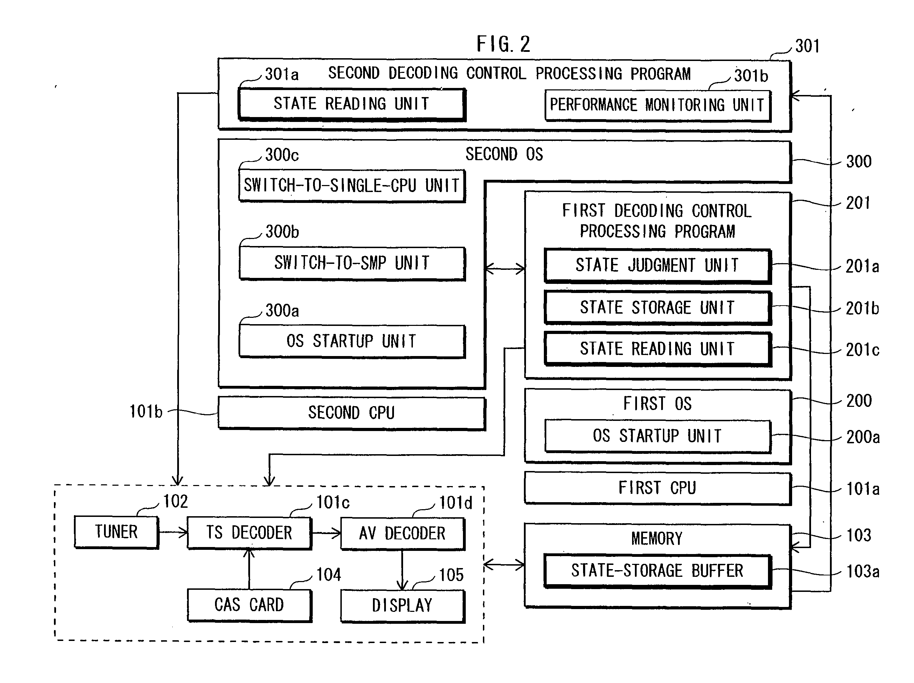

The following is a description of a relationship between a hardware layer and a software layer of the decoding apparatus 100 with reference to Fig.2.

Fig.2 is a schematic view of the hardware layer and software layer in the decoding apparatus 100.

As shown in Fig.2, a first OS 200 runs on the first CPU 101a, and a second OS 300 runs on the second CPU 101b.

### 2-1. First OS

The first OS 200 is an OS specialized for MPEG decoding, and instructs the first CPU to execute processing relating to MPEG decoding. Although use of the first OS 200 is limited to MPEG decoding, the simplicity of the program enables a fast startup time of approximately 1.0 seconds.

The first OS 200 includes an OS startup unit 200a, which is a program for starting up the first OS 200.

Also, a first decoding control processing program 201 for performing processing pertaining to MPEG decoding runs on the first OS 200.

The first decoding control processing program 201 includes a state judgment unit 201a, a state storage unit 201b, and a state reading unit 201c.

The state judgment unit 201a is a program for performing acquisition and judgment of the scramble key Ks, and acquisition and judgment of network settings information and program channel information.

The state storage unit 201b is a program for registering, in the AV decoder 101d, the scramble key Ks on which judgment was performed by the state judging unit 201a, and for storing the network settings information and program channel information to a state-storage buffer area 103a of the memory 103.

The state reading unit 201c is a program for reading the network settings information and program channel information stored in the state-storage buffer area 103a.

### 2-2. Second OS (AV)

The second OS 300 is a general-purpose OS for performing various types of processing other than MPEG decoding, such as digital broadcast channel determination and increasing/decreasing the volume of a digital broadcast. The second OS 300 instructs the second CPU 101b to execute the aforementioned processing. The second OS 300 is compatible with SMP processing and also instructs the first CPU 101a and the second CPU 101b to simultaneously and distributively perform the aforementioned processing.

The second OS 300 is a multi-purpose OS, and due to the complexity of the program, the startup time thereof is approximately 5.0 seconds, which is slower than the first OS 200.

The second OS 300 includes an OS startup unit 300a, a switch-to-SMP unit 300b, and a switch-to-single-CPU unit unit 300c.

The OS startup unit 300a is a program for starting up the second OS 300.

The switch-to-SMP unit 300b is a program for, when the second OS 300 is running on a single processor, switching the second OS 300 to SMP processing. Specifically, in preparation for SMP processing, the switch-to-SMP unit 300b causes the second CPU 101b to execute processing such as initialization of the memory 103 as a memory area to be shared by the first CPU 101a and the second CPU 101b, initialization of interrupt processing, and kernel expansion.

The switch-to-single-CPU unit 300c is a program for, when the first CPU 101a and second CPU 101b are running by the SMP processing, changing to a single processor state in which only the second CPU 101b is operated.

Also, a second decoding control processing program 301 for performing processing pertaining to MPEG decoding runs on the second OS 300.

The second decoding control processing program 300 includes a state reading unit 301a and a performance monitoring unit 301b.

The state reading unit 301a is a program for reading network settings information and program channel information, which is saved in the state-storage buffer area 103a of the memory 103.

The performance monitoring unit 301b is a program for monitoring the performance of both the first CPU 101a and second CPU 101b while they are executing SMP processing on the second OS 300, that is to say, a program for monitoring whether processing performance has fallen below a predetermined level.

### 3. Scramble key

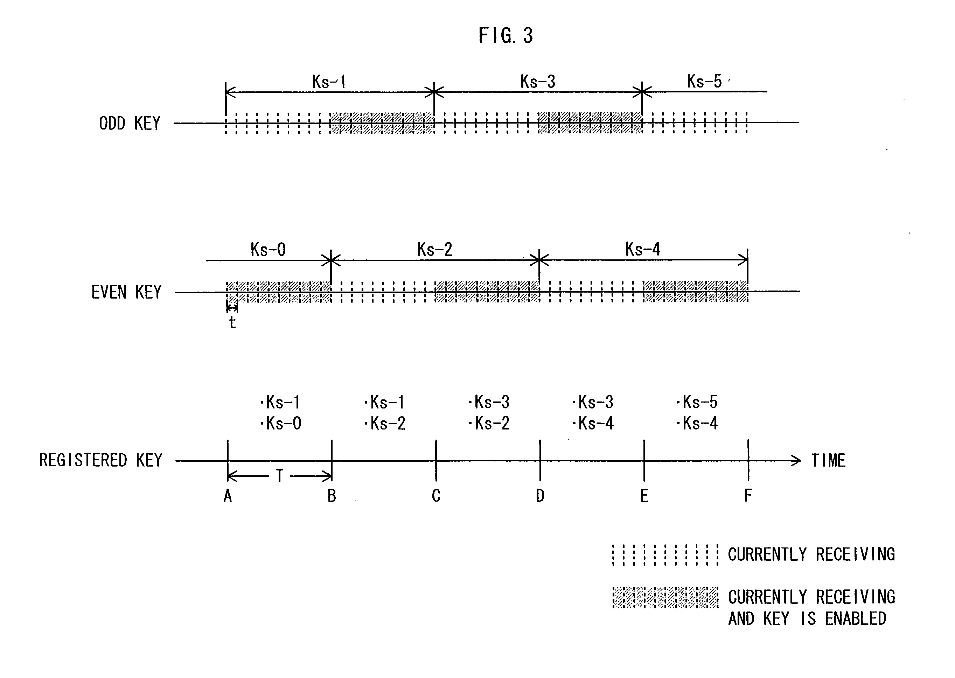

The following describes the scramble key Ks with reference to Fig.3.

As shown in Fig.3, the ECM to be received includes two types of scramble keys Ks, namely an Odd key and an Even key. The first CPU 101a receives the ECM at a predetermined time interval t in accordance with an instruction from the state storage unit 201b, and registers the two types of scramble keys Ks in the AV decoder 101d. The two types of scramble keys Ks are used alternately per predetermined time period T.

For example, during the predetermined time period T from point A to point B shown in Fig.3, both an Odd key Ks-1 and an Even key Ks-0 included in the ECM are registered in the AV decoder 101d. Here, the Even key Ks-0 is used to decode the AV data.

During the predetermined time period T from point B to point C, which is the next timing, both the Odd key Ks-1 and an Even key Ks-2 included in the ECM are registered in the AV decoder 101d. Here, the Odd key Ks-1 is used to decode the AV data.

During the predetermined time period T from point C to point D, which is the next timing, both an Odd key Ks-3 and the Even key Ks-2 included in the ECM are registered in the AV decoder 101d. Here, the Even key Ks-2 is used to decode the AV data.

During the predetermined time period T from point D to point E, which is the next timing, both the Odd key Ks-3 and an Even key Ks-4 included in the ECM are registered in the AV decoder 101d. Here, the Odd key Ks-3 is used to decode the AV data.

During the predetermined time period T from point E to point F, which is the next timing, both an Odd key Ks-5 and the Even key Ks-4 included in the ECM are registered in the AV decoder 101d. Here, the Even key Ks-4 is used to decode the AV data.

In this way, the two types of scramble keys, namely the Even key and the Odd key, are registered in the state-storage buffer area 103a at all times, and either one of the scramble keys is in use.

### 4-1. Operations, part 1

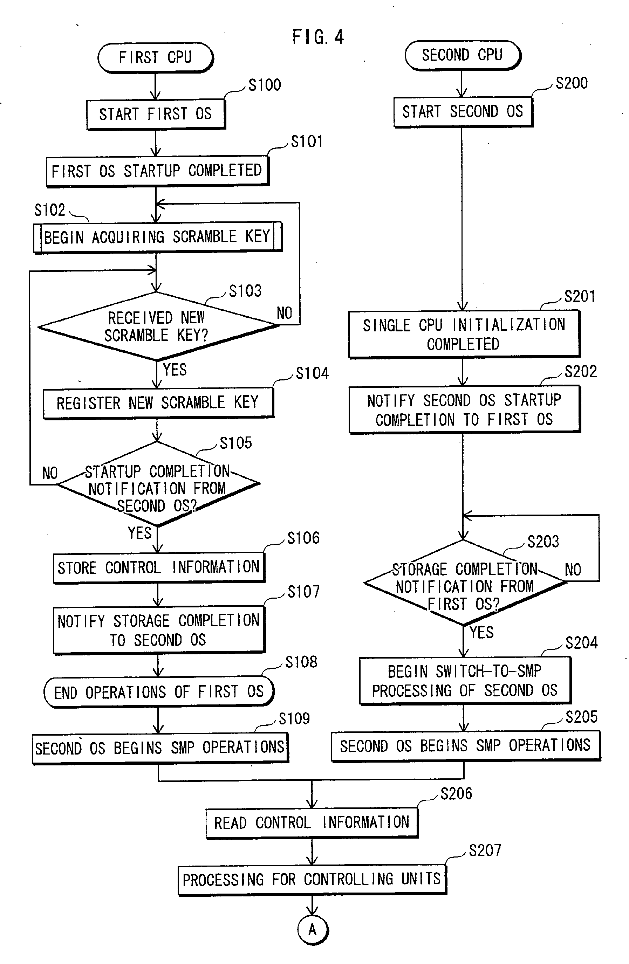

Next is a description of operations performed by the decoding apparatus 100 for receiving the digital broadcast and decoding the stream data, with reference to Fig.4.

When the user activates the power supply of the decoding apparatus 100, as shown in Fig.4, first the OS startup unit 200a starts up the first OS 200 on the first CPU 101a (step S100), and the OS startup unit 300a starts up the second OS 300 on the second CPU 101b (step S200).

After startup of the first OS 200 on the first CPU 101a is finished in approximately 1.0 seconds (step S101), the state judgment unit 201a of the first decoding control processing program 201 is executed, a PSI demultiplexed by the TS decoder 101c is received, and acquisition of the scramble key Ks is begun (step S102).

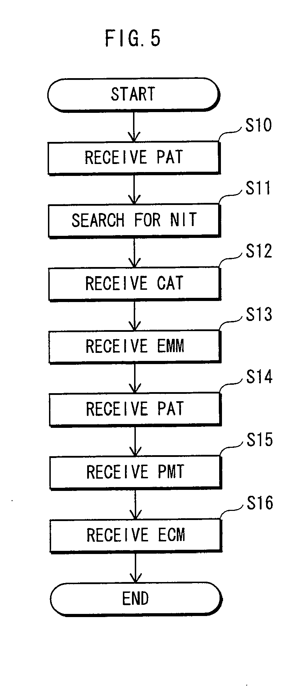

The following is a detailed description of processing performed by the state judgment unit 201a in step S102 to acquire the scramble key Ks, with reference to Fig.5.

As shown in Fig.5, in step S102, first, on the CPU 101a, a PAT (Program Association Table) included in the PSI is received, and program channel information is acquired (step S10).

Then, an NIT (Network Information Table) is received, and network-related setting information such as a modulation method and a guard interval is received (step S11).

Next, a CAT (Conditional Access Table) is received, and private information of a broadcast program broadcasted by the conditional access system is acquired (step S12).

Next, an EMM is received, the EMM is descrambled with use of the master key Km stored on the CAS card 104, and the obtained work key Kw is stored on the CAS card 104 (step S13).

Next, a PAT is again received (step S14), and a PMT of a broadcast program to be decoded is received (step S15).

Next, an ECM is received, the ECM is descrambled with use of the work key Kw stored on the CAS card 104, and a scramble key Ks is acquired (step S16).

When control information including the scramble key Ks has been acquired by the above processing from steps S10 to S16, whether the acquired scramble key Ks differs from the scramble key Ks received in the previous instance (before the predetermined time period t) is judged (step S103).

If either the Even or Odd key of the scramble key Ks has changed (step S103:YES), the state storage unit 201b is executed on the first CPU 101a, and the new scramble key Ks is registered in the AV decoder 101d (step S104).

If neither the Even nor Odd key has changed (step S103:NO), processing for acquiring the scramble key Ks is performed again after the predetermined time t has elapsed (step S102). In other words, step S102 is repeated until a new scramble key Ks is received.

Meanwhile, when startup of the second OS 300 on the second CPU 101b is completed (step S201), notification that startup of the second OS 300 has been completed is sent to the first OS 200 (step S202).

Upon receiving the startup completion notification from the secondOS 300 (step S105:YES), the first OS 200 stores, in the state-storage buffer area 103a, the network settings information and program channel information (hereinafter, collectively called "control information") that were acquired in step S102 (step S106).

When storage of the control information to the state-storage buffer area 103a is complete, a notification to this effect is sent to the second OS 300 (step S107), and the first OS 200 is ended (step S108).

Upon receiving the storage completion notification from the first OS 200 (step S203:YES), the second OS 300 begins switch-to-SMP processing, which is processing to prepare for executing SMP processing on the second OS 300 (step S204).

When switch-to-SMP processing is completed, the second OS 300 starts up and begins SMP processing on the first CPU 101a (step S109), and starts up and begins SMP processing on the second CPU 101b as well (step S205).

When SMP processing begins, the state reading unit 301a of the second decoding control processing program 301 is executed to read the control information from the state-storage buffer area 103a (step S206), and the first CPU 101a and second CPU 101b share control of the units of the AV decoder 101d (step S207).

From step S207 onward, the second OS 300 running on both the CPUs 101a and 101b instructs the AV decoder 101d to decode AV data based on the read control information. Although not described in detail, the second OS 300 also executes processing such as changing channels in accordance with a user selection of a broadcast program and increasing/decreasing the volume while decoded AV data is being played.

Performing the above processing of steps S100 to S207 enables causing the quick-starting first OS 200 to start up and acquire control information necessary for decoding of AV data, during startup of the slow-starting second OS 300, which is the main OS.

Steps S102 to S104 in particular are very significant, and if not performed when a new scramble key Ks is received, a startup commencement notification from the second OS 300 is not accepted. In other words, taking the example of points A to F shown in Fig. 3, a new scramble key Ks is first registered upon reception of the new key (step S104). As such, the predetermined time periods t (e.g., points A to B, B to C, C to D, D to E, and E to F shown in Fig.3) are used in full to execute the following switch-to-SMP processing of the second OS 300 (step S204), thereby enabling the switch-to-SMP processing to be completed before the next new scramble key Ks is received.

The following is a specific example to facilitate understanding. Even if the scramble key Ks (Odd key Ks-1 and Even key Ks-0) is acquired between points A and B shown in Fig.3 (step S102), it is not registered since the previously acquired scramble key Ks includes the same keys Ks-1 and Ks-0.

Upon reaching point B, another scramble key Ks (Odd Key Ks-1 and Even key Ks-2) is acquired, which is different from the previous scramble key Ks including keys Ks-1 and Ks-0. It is therefore judged that a new scramble key Ks has been received (step S103:YES).

At this time, the new scramble key Ks (Ks-1 and Ks-2) is registered in the AV decoder 101d (step S106), and in response to the notification from the second OS 300, the control information is stored in the state-storage buffer area 103d (step S106).

Since the scramble key Ks (Ks-1 and Ks-2) does not change during the predetermined time period t from points B to C when the scramble key Ks was registered and the control information was stored, this predetermined time period t is used in full for completion of the switch-to-SMP processing, and for the second OS 300 to begin SMP operations (steps S109 and S205).

Since the scramble key Ks has not changed at the point when step S205 is performed, the scramble key Ks (Ks-1 and Ks-2) registered in the AV decoder 101d can be used to immediately begin decoding AV data.

### 4-2. Operations, part 2

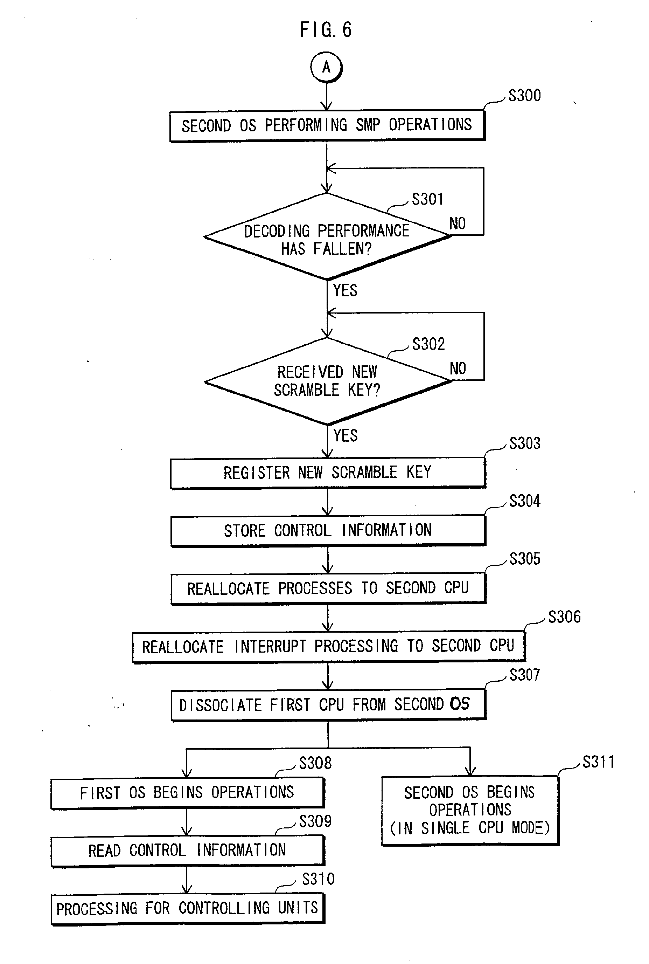

Next is a description of operations performed after SMP processing has begun on the first CPU 101a and second CPU 101b, with reference to Fig.6.

As shown in Fig.6, the second OS 300 is executing SMP processing on the first CPU 101a and second CPU 101b (step S300).

Meanwhile, the performance monitoring unit 301b of the second decoding control processing program 301 monitors whether the performance of AV decoding processing on the CPUs 101a and 101b has dropped (step S301). Specifically, it is sufficient for the performance monitoring unit 301b to monitor whether the processing speed of the CPUs 101a and 101b has fallen below a predetermined level.

If the performance is judged to have fallen below the predetermined level (step S301:YES), the second OS 300 waits until a new scramble key Ks (Odd key and Even key) is received (step S302).

When a new scramble key Ks is received (step S302:YES), the new scramble key Ks is registered in the AV decoder 101d (step S303), and the control information currently being used is stored in the state-storage buffer area 103a (step S304).

Next, the switch-to-single-CPU unit 300 cancels the processes currently allocated to the first CPU 101a, and reallocates the cancelled processes to the second CPU 101b (step S305).

At the same time, the switch-to-single CPU unit 300 cancels the external interrupt processing currently allocated to the first CPU 101a, and reallocates the external interrupt processing to the second CPU 101b (step S306).

When reallocation of the processes and external interrupt processing is completed, the second OS 300 dissociates from the first CPU 101a (step S307).

As a result, SMP processing performed by the second OS 300 is ended, and the first CPU 101a and second CPU 101b perform execution by single processor processing.

On the first CPU 101a, the first OS 200 starts up and begins operations (step S308), the state reading unit 301a reads the control information stored in the state-storage buffer area 103a (step S309), and the first OS 200 begins controlling the units of the AV decoder 101d (step S310).

On the second CPU 101b, the second OS 300 uses single processor processing to execute processing such as switching channels according to a user selection of a broadcast program, and increasing/decreasing the volume when playing decoded AV data (step S311).

From step S307 on, the first CPU 101a controls the AV decoder 101d by single processor processing to decode AV data, and the second CPU 101b uses single processor processing to execute processing such as switching channels according to a user selection of a broadcast program, and increasing/decreasing the volume when playing decoded AV data.

As a result of performing the processing of steps S200 to S311, if there is a delay in AV data decoding and performance drops during SMP processing due to processing such as switching channels according to a user selection of a broadcast program, and increasing/decreasing the volume when playing decoded AV data, the first CPU 101a and second CPU 101b dissociate from each other. In this case, the first CPU 101a executes solely AV data decoding, and the second CPU 101b executes solely other processing. This enables an improvement in the overall performance of the decoding apparatus 100.

Steps S302 to S304 in particular are very significant, and if not performed when a new scramble key Ks is received, SMP processing is not ended even if performance drops. In other words, taking the example of points A to F shown in Fig.3, a new scramble key Ks is first registered upon reception of the new key (step S303). As such, the predetermined time periods t (e.g., points A to B, B to C, C to D, D to E, and E to F shown in Fig.3) are used in full to execute switch-to-single-processor processing (steps 305 to S307), thereby enabling the switch-to-single-processor processing to be completed before the next new scramble key Ks is received.

The following is a specific example for facilitating understanding. Even if the performance monitoring unit 301b judges in step S301 that performance has dropped, the scramble key Ks (Odd key Ks-1 and Even key Ks-0) acquired between points A and B shown in Fig. 3 is not registered since the previously acquired scramble key Ks includes the same keys Ks-1 and Ks-0.

Upon reaching point B, another scramble key Ks (Odd Key Ks-1 and Even key Ks-2) is acquired, which is different from the previous scramble key Ks including keys Ks-1 and Ks-0. It is therefore judged that a new scramble key Ks has been received (step S302:YES).

At this time, the new scramble key Ks (Ks-1 and Ks-2) is registered in the AV decoder 101d (step S303), and in response to the notification from the second OS 300, the control information is stored in the state-storage buffer area 103a (step S304).

Since the scramble key Ks (Ks-1 and Ks-2) does not change during the predetermined time period t from points B to C when the scramble key Ks was registered and the control information was stored, this predetermined time period t is used in full for completion of the switch-to-single-processor processing, and for the first CPU 101a and second CPU 101b to begin single processor processing (steps S305 to S307).

Since the scramble key Ks has not changed at the point when step S308 is performed, the first OS 200 can use the scramble key Ks (Ks-1 and Ks-2) registered in the AV decoder 101d to immediately begin decoding AV data.

### Embodiment 2

### 1. Overview

The following describes embodiment 2 of the present invention.

In embodiment 1, the first decoding control processing program 201 and the second decoding control processing program 301 are separately provided and run on the first OS 200 and the second OS 300 respectively. In contrast, in embodiment 2, the first decoding control processing program 201 is emulated on the second OS 300.

### 2. Structure

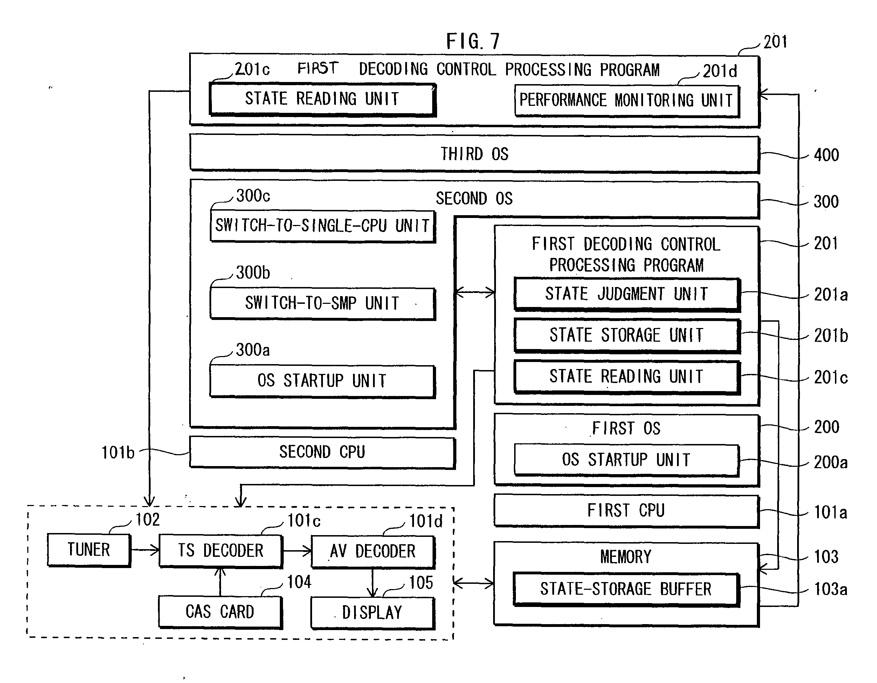

As shown in Fig.7, in embodiment 2, the second OS 300 and furthermore a third OS 400 are started on the second CPU 101b, and the first decoding control processing program 201 is executed on the third OS 400.

Details of the first OS 200 and the second OS 300 have been omitted since they are the same as in embodiment 1.

The first decoding control processing program 201 of embodiment 2 includes a performance monitoring unit 201d.

The performance monitoring unit 201d is a program for monitoring the performance of the first CPU 101a and the second CPU 101b while both are executing SMP processing (i.e., monitors whether execution performance has fallen below a predetermined level).

### 2.1 Third OS

The third OS 400 emulates the first OS 100 on the second OS 200, and runs the first decoding control processing program 201 that has been designed with code that runs on the first OS 100. The third OS 400 starts up at a fast time of approximately 1.0 seconds due to having been designed specifically to emulate the first OS 100.

### 3.1 Operations, part 1

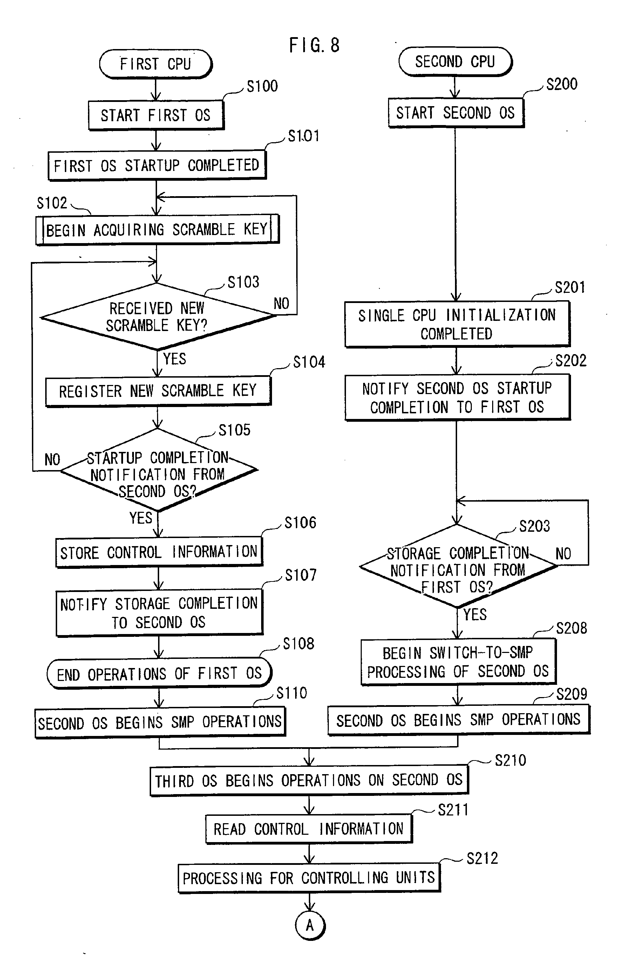

Next is a description of operations performed by the decoding apparatus 100 of embodiment 2, to receive a digital broadcast and decode stream data, with reference to Fig.8.

Note that the same reference characters have been given to the same processing as is executed by the decoding apparatus 100 of embodiment 1.

When a user activates the power supply of the decoding apparatus 100, as shown in Fig.8, first the OS startup unit 200a starts up the first OS 200 on the first CPU 101a (step S100), and the OS startup unit 300a starts up the second OS 300 on the second CPU 101b (step S200).

After startup of the first OS 200 on the first CPU 101a is finished in approximately 1.0 seconds (step S101), the state judgment unit 201a of the first decoding control processing program 201 is executed, a PSI demultiplexed by the TS decoder 101c is received, and acquisition of the scramble key Ks is begun (step S102).

Details of processing executed in step S102 for acquiring the scramble key Ks are the same as described in Fig.5.

When control information including the scramble key Ks has been acquired, whether the acquired scramble key Ks differs from the scramble key Ks received in the previous instance (before the predetermined time period t) is judged (step S103).

If either the Even or Odd key of the scramble key Ks has changed (step S103:YES), the state storage unit 201b is executed on the first CPU 101a, and the new scramble key Ks is registered in the AV decoder 101d (step S104).

If neither the Even nor Odd key has changed (step S103:NO), processing for acquiring the scramble key Ks is performed again after the predetermined time t has elapsed (step S102).

Meanwhile, when startup of the second OS 300 on the second CPU 101b is completed (step S201), notification that startup of the second OS 300 has been completed is sent to the first OS 200 (step S202).

Upon receiving the startup completion notification from the second OS 300 (step S105:YES), the first OS 200 stores, in the state-storage buffer area 103a, the control information that was acquired in step S102 (step S106).

When storage of the control information to the state-storage buffer area 103a is complete, a notification to this effect is sent to the second OS 300 (step S107), and the first OS 200 is ended (step S108).

Upon receiving the storage completion notification from the first OS 200 (step S203:YES), the second OS 300 begins switch-to-SMP processing, which is processing to prepare for executing SMP processing on the second OS 300 (step S208). In contrast to the switch-to-SMP processing shown in step S205 of embodiment 1, the switch-to-SMP processing of embodiment 2 includes processing that starts up the third OS 400 for running the first decoding control processing program 201 on the second OS 300.

When switch-to-SMP processing has been completed, the second OS 300 is started on both the CPUs 101a and 101b, and furthermore the third OS 400 is started and SMP processing is begun (step S210).

When SMP processing begins, a reading unit 201c of the first decoding control processing program 201 is executed to read the control information from the state-storage buffer area 103a (step S211), and the first CPU 101a and second CPU 101b share control of the units of the AV decoder 101d (step S212).

From step S211 onward, the second OS 300 running on both the CPUs 101a and 101b instructs the AV decoder 101d to decode AV data based on the read control information. Although not described in detail, the second OS 300 also executes processing such as changing channels in accordance with a user selection of a broadcast program and increasing/decreasing the volume while decoded AV data is being played.

Running the third OS 400 that emulates the first OS 200 on the second OS 300 and performing SMP processing enables causing the first decoding control processing program 201 running on the first OS 200 to participate in the SMP processing as well. This enables a reduction in the number of programs stored in the decoding apparatus 100.

### 3.2 Operations, part 2

Similarly to embodiment 1, in embodiment 2, whether or not AV decoding processing performance on both the CPUs 101a and 101b has dropped is monitored while SMP processing is being executed on these CPUs.

In embodiment 2, the performance monitoring unit 201d of the first decoding control processing program 2'01 monitors whether the processing speed of the CPUs 101a and 101b has fallen below a predetermined level. If the processing speed is judged to have fallen below the predetermined level, the switch-to-single-CPU unit 300 executes processing for switching to single processor processing.

At this time, the decoding apparatus 100 waits from when the performance has been judged to have fallen until a new scramble key Ks (Odd key and Even key) has been received, and thereafter registers the received new scramble key Ks in the AV decoder 101d, as well as stores the currently used control information in the state-storage buffer area 103a.

Next, the switch-to-single-CPU unit 300 cancels the processes currently allocated to the first CPU 101a, and reallocates the cancelled processes to the second CPU 101b. At the same time, the switch-to-single CPU unit 300 cancels the external interrupt processing currently allocated to the first CPU 101a, and reallocates the external interrupt processing to the second CPU 101b.

When reallocation of the processes and external interrupt processing is completed, the second OS 300 dissociates from the first CPU 101a.

As a result, SMP processing performed by the second OS 300 is ended, and the first CPU 101a and second CPU 101b perform processing by single processor processing.

### Variations

Although the decoding apparatus of the present invention has been described above based on embodiments 1 and 2, various modifications can be made to the structures and operations of these embodiments.

For example, in embodiment 1, the first OS 200 starts up in approximately 1.0 seconds, and the second OS 300 starts up in approximately 5.0 seconds. However, this is nothing more than an example, and the present invention should not be limited to this. Either the first OS 200 or the second OS 300 may have a shorter start up time.

Similarly, in the second embodiment, the third OS 400 has a start up time of approximately 1.0 seconds. However, this is nothing more than an example, and the present invention should not be limited to this.

### Supplementary notes

The first and second decoding control processing programs 201 and 301 may be computer programs realized by a computer, or may be digital signals representing the computer programs.

Each of the first and second decoding control processing programs 201 and 301 may be realized as a computer-readable recording medium such as flexible disk, a hard disk, CD-ROM (Compact Disc - Read Only Memory), MO (Magneto Optical disk), DVD (Digital Versatile Disk), DVD-ROM (Digital Versatile Disk - read only memory), DVD-RAM (Digital Versatile Disk - RandomAccess Memory), BD (Blue-ray Disc), or a semiconductor memory containing the above computer programs or digital signals recorded thereon.

Also, the first and second decoding control processing programs 201 and 301 may be transferred via telecommunication lines, radio communications, communication lines, or a network such as the Internet.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A decoding apparatus for successively receiving stream data and key data that is updated at a predetermined cycle and has been used to successively encrypt the stream data, and for decoding the stream data, the decoding apparatus comprising:
a reception unit operable to successively receive the stream data and the key data; and
a control unit including a first processor and a second processor that share a memory, wherein
the control unit causes the first processor to execute a first OS and execute a first decoding control processing program on the first OS, the first decoding control processing program controlling decryption of the stream data with use of the received key data, and in parallel, causes the second processor to execute distributed-execution preparation processing pertaining to a second OS on which distributed execution can be performed by a plurality of processors, and
in a predetermined time period that is shorter than the predetermined cycle and begins at a first point when the first processor began controlling decryption of the stream data with use of the received key data, the control unit causes the first processor to, instead of executing the first OS, execute distributed execution processing on the second OS, and in parallel, causes the second processor as well to execute the distributed execution processing on the second OS, and execute a second decoding control processing program on the second OS, the second decoding control processing program being for decoding the stream data.

2. The decoding apparatus of claim 1, wherein
the control unit begins executing processing when power is supplied to start the control unit,
the distributed-execution preparation processing executed by the second processor includes processing for starting the second OS in a mode of operating on a single processor,
the distributed execution processing executed on the second OS by the first processor includes processing for ending the first OS, and
the distributed execution processing executed on the second OS by the second processor includes processing for changing the second OS to a mode of operating on a plurality of processors.

3. The decoding apparatus of claim 1, wherein the reception unit periodically receives the key data at a predetermined timing,
the control unit detects that the key data has been updated, and
the first point is a point at which the reception unit receives new key data at a first timing after the control unit has detected that the key data has been updated.

4. The decoding apparatus of claim 1, further comprising:
a decoding unit including a storage subunit and operable to decode the stream data, wherein
the first decoding control processing program includes processing for recording the received key data to the storage subunit, and
the second decoding control processing program includes processing for controlling the decoding unit to decode the stream data with use of the key data recorded in the storage subunit.

5. The decoding apparatus of claim 4, wherein
the stream data is digital broadcast stream data including elementary streams of a plurality of broadcast programs, and a plurality of channel information pieces each indicating a channel of a different one of the broadcast programs,
the decoding apparatus further comprises:
an operation unit operable to receive a user operation selecting an arbitrary broadcast program from among the plurality of broadcast programs,
the first decoding control processing program includes processing for recording, to the storage subunit, a channel information piece, from among the plurality of channel information pieces, that indicates the channel of the broadcast program selected according to the user operation, and
the second decoding control processing program includes processing for controlling the decoding unit to decode the stream data with use of the channel information piece recorded in the storage subunit.

6. The decoding apparatus of claim 1, wherein the first decoding control processing program and the second decoding control processing program are individual programs,
the first decoding control processing program is executed by the individual program pertaining thereto being loaded into the memory under management of the first OS,
the second decoding control processing program is executed by the individual program pertaining thereto being loaded into the memory under management of the second OS, and
when execution of the second decoding control processing program on the second OS has begun, the control unit executes a third OS on the second OS as a guest OS emulating the first OS, and executes the second decoding control processing program on the third OS.

7. The decoding apparatus of claim 1, wherein
the first decoding control processing program includes processing for recording the received key data to the memory, and
the second decoding control processing program includes processing for decoding the stream data with use of the key data recorded in the memory.

8. The decoding apparatus of claim 7, wherein
the stream data is digital broadcast stream data including elementary streams of a plurality of broadcast programs, and a plurality of channel information pieces each indicating a channel of a different one of the broadcast programs,
the decoding apparatus further comprises:
an operation unit operable to receive a user operation selecting an arbitrary broadcast program from among the plurality of broadcast programs,
the first decoding control processing program includes processing for recording, to the memory, a channel information piece, from among the plurality of channel information pieces, that indicates the channel of the broadcast program selected according to the user operation, and
the second decoding control processing program includes processing for decoding the stream data with use of the channel information piece recorded in the memory.

9. The decoding apparatus of claim 1, wherein
the second OS has a mode of operating on a single processor and a mode of operating on a plurality of processors, and
when an execution performance of the second decoding control processing program being executed on the second OS falls below a predetermined level due to an influence of another program operating on the second OS, the control unit causes the first processor to, instead of executing the second OS, execute the first OS and execute the fir.st decoding control processing program on the first OS, and in parallel, causes the second processor to end execution of the second decoding control processing program, and controls the second OS to change to the mode of operating on a single processor and begin execution of the other program.

10. An integrated circuit for externally inputting stream data and key data that is updated at a predetermined cycle and has been used to successively encrypt the stream data, and for decoding the stream data, the integrated circuit comprising:
an input unit operable to externally input the stream data and the key data successively; and
a control unit including a first processor and a second processor that share an external memory, wherein
the control unit causes the first processor to execute a first OS and execute a first decoding control processing program on the first OS, the first decoding control processing program controlling decryption of the stream data with use of the input key data, and in parallel, causes the second processor to execute distributed-execution preparation processing pertaining to a second OS on which distributed execution can be performed by a plurality of processors, and
in a predetermined time period that begins at a first point when the first processor began controlling decryption of the stream data with use of the received key data and ends before a second point when the key data is updated, the control unit causes the first processor to, instead of executing the first OS, execute distributed execution processing on the second OS, and in parallel, causes the second processor as well to execute the distributed execution processing on the second OS, and execute a second decoding control processing program on the second OS, the second decoding control processing program being for decoding the stream data.
